# EUROPÄISCHE PATENTSCHRIFT

(11) **EP 0 586 837 B1**
(45) Veröffentlichungstag und Bekanntmachung des Hinweises auf die Patenterteilung: **22.01.1997**
(21) Anmeldenummer: 93111425.0
(22) Anmeldetag: 16.07.1993
(51) Int. Cl.: C10J 3/48

(54) **Vorrichtung zur Kühlung von heissen Gasen**
Device for cooling hot gases
Dispositif de refroidissement de gaz chauds

(30) Priorität: 09.09.1992 DE 4230124
(43) Veröffentlichungstag der Anmeldung: 16.03.1994
(73) Patentinhaber: Deutsche Babcock Energie- und Umwelttechnik Aktiengesellschaft, 46049 Oberhausen (DE)
(72) Erfinder: Jelich, Werner, D-44803 Bochum (DE)
(74) Vertreter: Müller, Jürgen, Dipl.-Ing.

(56) Entgegenhaltungen:
- EP-A- 0 284 762
- DE-A- 2 951 153
- GB-A- 2 061 758

## Beschreibung

Die Erfindung betrifft eine Vorrichtung zur Kühlung von in einem Reaktor durch Partialoxidation erzeugten, heißen, feststoffbeladenen Gasen mit den Merkmalen des Oberbegriffes des Patentanspruches 1.

Die Anforderungen an moderne Flugstromvergasungsverfahren, eine multivalente Brennstoffpalette vergasen zu können, wird durch die der Vergasung nachgeschalteten, energetisch nutzbaren Gaskühlung stark eingeschränkt. Es sind Abhitzesysteme bekannt, die für ein definiertes Brennstoffband die fühlbare Wärme des Rohgases effizient nutzen. Derartige Abhitzesysteme verwenden entweder einen Strahlungskühler (DE-PS 31 47 864) zur effizienten Wärmenutzung oder einen Quenchkühler (DE-PS 29 40 933), um das Rohgas teilweise oder vollständig abkühlen.

Der Strahlungskühler ist in einem Behälter angeordnet, der in seinem unteren Teil ein Wasserbad aufnimmt, um die von dem erzeugten Gas mitgeführten teigigen Aschepartikel aufzufangen und zu granulieren. Bei einer anderen bekannten Einrichtung (DE-PS 29 51 153) zur Kühlung und Reinigung von durch Kohlevergasung erzeugtem Synthesegas kann ein Teilstrom oder der gesamte Gasstrom aus dem Strahlungskühler durch das Wasserbad geleitet und über einen weiteren Gasabführungsstutzen abgeführt werden. Auf diese Weise soll der einem nachgeschalteten Abhitzekessel zugeführte Gasstrom temperaturmäßig in weiten Grenzen variiert werden. Der Spiegel des Wasserbades ragt in den an das Wasserbad angeschlossenen Gasabführungsstutzen hinein. Bei diesem Kühler nimmt das Gas beim Durchtritt durch das Wasserbad zwar in erwünschter Weise Wasser auf, das für eine chemische Reaktion bei der Weiterverarbeitung des Gases benötigt wird. Allerdings lassen sich bei dieser Anordnung Wassertröpfchen im Rohgas, die zu Störungen in den nachgeschalteten Anlagen führen können, nicht vermeiden. In dem Wasserbad ist ein Wärmetauscher angeordnet, um die Wassertemperatur weitgehend regeln zu können und um ein Ausdampfen des Wasserbades beim Durchtritt des Gases zu verhindern.

Bei der Flugstromvergasung, die auf einem hohen Temperaturniveau betrieben wird, ist es insbesondere für den kombinierten Gas/Dampfturbinen-Prozeß (GuD-Prozeß) erforderlich, die fühlbare Wärme des heißen Rohgases zur Stromerzeugung zu nutzen, da diese ca. 20% bezogen auf den Kraftwerkswirkungsgrad ausmacht. Durch die Erfordernisse, den im Brennstoff enthaltenen Kohlenstoff bei der Vergasung möglichst vollständig umzusetzen, ist die Gastemperatur am Austritt aus dem Vergasungsreaktor im wesentlichen von den Fließeigenschaften der Brennstoffasche abhängig. Je nach Brennstoff sind somit Gaseintrittstemperaturen von mehr als 1800 °C im nachgeschalteten Abhitzesystem möglich. Um Störungen, verursacht durch die schmelsflüssige Schlacke, oder je nach Prozeßführung, durch die mit dem Gasstrom mitgerissenen teigigen Partikel in nachgeschalteten Anlageteilen zu vermeiden, muß das Rohgas mindestens auf ca. 700 °C bis 1000 °C, vorzugsweise in einem Strahlungskühler abgekühlt werden.

Bei dem Einsatz einiger Brennstoffe z. B. Salzbraunkohlen, ist eine weitere Gaskühlung in einem dem Strahlungskühler nachgeschalteten konvektiven Abhitzeteil nicht möglich, da die aus dem Brennstoff resultierenden Sublimate im Rohgas zu unzulässig hohen Verschmutzungen der Heizflächen führen können. In diesem Fall ist nur eine Gaskühlung über eine Quencheinrichtung, vorzugsweise über eine Tauchquenchung möglich. Salzbraunkohlen sind bisher nur in einem Flugstromvergasungsverfahren mit anschließender Tauchquenchung erfolgreich vergast worden.

Der Erfindung liegt die Aufgabe zugrunde, die gattungsgemäße Vorrichtung so zu gestalten, daß sie zur Kühlung solcher Gase geeignet ist, die durch Vergasung eines breiten Brennstoffbandes erzeugt werden.

Diese Aufgabe wird bei einer gattungsgemäßen Vorrichtung erfindungsgemäß durch kennzeichnenden Merkmale des Patentanspruches 1 gelöst. Vorteilhafte Ausgestaltungen der Erfindung sind Gegenstand der Unteransprüche.

Durch die erfindungsgemäßen Maßnahmen sind alle Erfordernisse, die an die Kühlung eines durch die Vergasung eines breiten Brennstoffbandes erzeugten Rohgases gestellt werden, in einem einzigen Gaskühler derart integriert, daß eine Vorkühlung der heißen Rohgase in dem Strahlungskühler, eine mögliche weitere Abkühlung über die Wassereindüsung und eine Schlußkühlung über die Tauchquenchung möglich sind. Dabei kann das Rohgas insgesamt direkt nach dem Strahlungskühler oder nach der Tauchquenchung oder als eine Teilgasmenge nach dem Strahlungskühler und als Restgasmenge nach der Tauchquenchung abgeführt werden.

In dem erfindungsgemäßen Kühler werden bevorzugt Gase gekühlt, die durch eine Vergasung von Salzbraunkohle hergestellt sind. Solche Gase lassen eine Gaskühlung in einem dem Strahlungskühler nachgeschalteten Konvektionskühler nicht zu. Die Endkühlung erfolgt daher in dem Wasserbad durch Tauchquenchung. Dabei ist durch die Anordnung des Gassammelraumes die Möglichkeit geschaffen, aus dem das Wasserbad verlassenden Gas Wassertropfen und Staubpartikel abzutrennen.

Zur Erfüllung der Forderung, Gase abzukühlen, die durch Vergasung eines möglichst breiten Brennstoffbandes erzeugt worden sind, wird der Strahlungskühler auf den zunächst vorgesehenen Brennstoff ausgelegt. Sollte es bei Einsatz anderer Brennstoffe erforderlich sein, eine größere Temperaturdifferenz abbauen zu müssen als das durch den Strahlungskühler von vorgegebener Größe möglich, so kann dieses durch eine weitere, unterhalb des Strahlungskühlers vorgesehene Kühlung, z. B. durch Wassereindüsung erfolgen. Durch die Festlegung des Strahlungskühlers auf eine bestimmte Größe und die Möglichkeit einer weiteren Kühlung unterhalb des Strahlungskühlers kann die Baugröße des Kühlers insgesamt reduziert werden. Dadurch können die Nachteile der bekannten den Flugstromvergasungsreaktoren nachgeschalteten Strahlungskühler vermieden werden, die durch die Erfordernisse, das Rohgas und die schmelzflüssige Schlacke energetisch nutzbar abzukühlen, große apparative Abmessungen aufweisen. Aus Gründen der Baubarkeit und des Transportes sind aber die sinnvollen maximalen apparativen Abmessungen vorgegeben. So weist der einer Flugstromvergasung nachgeschaltete Strahlungskühler für ein 300 MW GuD - Kombikraftwerk und einer Gasabkühlung von 1600 °C auf 800 °C einen Außendurchmesser von ca. 5,0 - 6,0 m und eine Baulänge von 30,0 - 50,0 m auf. Damit ist die Grenze der wirtschaftlichen Baubarkeit erreicht. Diese Grenze wird durch die Erfindung erweitert.

Schließlich läßt die Erfindung die Möglichkeit zu, bei einem Ausfall einer dem Strahlungskühler nachgeschalteten Apparatur in einer mehrsträngigen Anlage den betroffenen Strang abzuschalten und die Überschußmenge an Gas durch das Wasserbad zu fahren und so auf die gewünschte Endtemperatur zu kühlen.

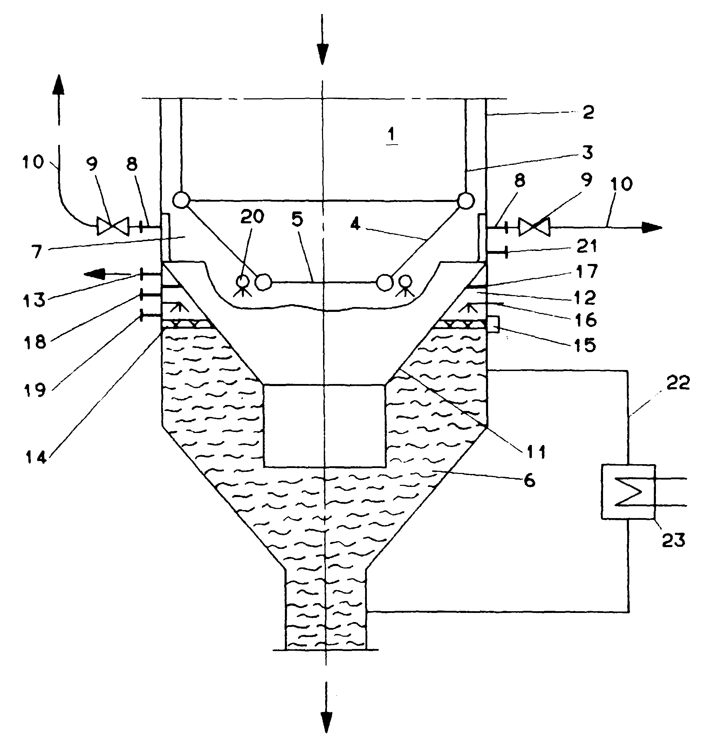

Ein Ausführungsbeispiel der Erfindung ist in der Zeichnung dargestellt und wird im folgenden näher erläutert. Die Zeichnung zeigt schematisch den Längsschnitt durch den unteren Teil eines Strahlungskühlers mit integrierter Quenchkühlung und Wassereindüsung.

Einem nicht gezeigten Vergasungsreaktor zur Vergasung von kohlenstoffhaltigem Brennstoff nach dem Flugstromvergasungsverfahren ist ein Strahlungskühler 1 nachgeschaltet, der innerhalb eines Druckbehälters 2 angeordnet ist. Der Strahlungskühler 1 ist durch gasdicht verschweißte, an einen Wasser-Dampf-Kreislauf angeschlossene Rohrwände 3 gebildet. In den Strahlungskühler 1 können zusätzlich aus Rohrwänden aufgebaute Schottenwände hineinragen. Der untere Teil des Strahlungskühlers 1 ist als Einschnürung 4 ausgebildet, deren engster Querschnitt den Gasaustritt 5 des Strahlungskühlers 1 darstellt.

In dem unteren Teil des Druckbehälters 2 befindet sich in einem Abstand unterhalb des Strahlungskühlers 1 ein Wasserbad 6. Zwischen dem Strahlungskühler 1 und dem Wasserbad 6 ist in dem Druckbehälter 2 ein erster Gassammelraum 7 gebildet, an den ein oder mehrere Gasabführungsstutzen 8 angeschlossen sind. Das in dem Vergasungsreaktor erzeugte und in dem Strahlungskühler 1 teilweise gekühlte Rohgas wird über das Wasserbad 6 geleitet und verläßt den Druckbehälter 2 durch die Gasabführungsstutzen 8. Die Gasabführungsstutzen 8 sind über Rohrleitungen 10 mit nicht gezeigten Aggregaten zur Nachbehandlung des Rohgases z. B. mit Konvektionskühlern und Gaswäschern verbunden. In den Rohrleitungen 10 sind in unmittelbarer Nähe der Gasabführungsstutzen 8 Absperrorgane 9 angeordnet. Als Absperrorgane 9 werden bevorzugt Brückenschieber eingesetzt.

Die von dem Rohgas mitgeführten teigigen Aschepartikel gelangen in das Wasserbad 6 und werden dort granuliert. Die granulierte Asche wird über ein Schleusensystem aus dem Wasserbad 6 abgezogen.

In das Wasserbad 6 ragt ein Einlauftrichter 11 hinein, der oberhalb des Wasserbades 6 mit dem Druckbehälter 2 gasdicht verbunden ist. Zwischen dem Druckbehälter 2 und dem Einlauftrichter 11 ist oberhalb des Wasserbades 6 ein zweiter Gassammelraum 12 gebildet, der mit einem oder mehreren weiteren Gasabführungsstutzen 13 versehen ist. Die Gasabführungsstutzen 13 sind vorzugsweise durch Kugelhähne absperrbar.

Der Einlauftrichter 11 ist in einem offenen, mit dem Wasserbad 6 in Verbindung stehenden Kühlsystem durch Wasser gekühlt, das durch einen in der Wandung des Druckbehälters 2 angebrachten Wasserzulauf 21 zugeführt wird. Die Eintrittstemperatur des Wassers ist so gewählt, die Bildung von Sublimationen an den von dem Rohgas berührten Kontaktflächen vermieden wird. An das Wasserbad 6 ist eine Umlaufleitung 22 angeschlossen, in der außerhalb des Druckbehälters 2 ein von einem Kühlmedium beaufschlagter Wärmetauscher 23 angeordnet ist. Über diesen externen Wärmetauscher 23 wird die von dem Wasser im Kontakt mit dem zu kühlenden Gas aufgenommene Wärme abgeführt.

Sind die an den ersten Gassammelraum 7 angeschlossenen Rohrleitungen 10 abgesperrt und die Gasabführungsstutzen 13 des zweiten Gassammelraumes 12 geöffnet, so strömt das Rohgas nach dem Verlassen des Strahlungskühlers 1 durch das Wasserbad 6, erfährt dort eine Quenchkühlung und tritt aus den Gasabführungsstutzen 13 aus. In dem zweiten Gassammelraum 12 ist oberhalb des Wasserbades 6 eine mechanische Staubabscheidung 14 installiert. Diese wird über eine Differenzdruckmessung 15 überwacht und vorzugsweise durch eine Wasserspülung 16 abgereinigt. Zwischen der mechanischen Staubabscheidung 14 und den Gasabführungsstutzen 13 ist eine Tropfenabscheidung 17 vorgesehen. Auf diese Weise ist gewährleistet, daß keine Staubpartikel, Aerosole etc. Störungen in der Verbindungsleitung zu einem nachgeschalteten Gaswäscher verursachen können.

Der zweite Gassammelraum 12 ist mit einem Anschluß 18 für die Zuführung eines Sperrmediums, mit einer Entlüftung 19 und mit einer Wasserstandsanzeige versehen. Für den Fall, daß das Rohgas nicht einer Tauchquenchung in dem Wasserbad 6 unterworfen werden soll und dementsprechend die Gasabführungsstutzen 13 des zweiten Gassammelraumes 12 geschlossen sind, wird über das Sperrmedium in dem zweiten Gassammelraum 12 ein Druck aufgebaut, der höher ist als der Gasdruck in dem ersten Gassammelraum 7. Das Rohgas wird in diesem Fall daran gehindert, in das Wasserbad 6 einzudringen.

In dem ersten Gassammelraum 7 ist ein Düsenring 20 angeordnet, der mit Umlaufwasser beaufschlagt wird. Durch diese Wassereindüsung kann das aus dem Strahlungskühler 1 ausströmende Rohgas tiefer abgekühlt werden, bevor es aus den Gasabführungsstutzen 13 austritt. Bei den meisten bekannten Brennstoffen liegt die Sublimationsgrenze des Rohgases zwischen 180 °C und 200 °C und der Wasserdampftaupunkt bei Einsatz der Flugstromvergasung in GuD-Prozessen zwischen 120 °C und 160 °C. Nach heutigen Erkenntnissen ist für die Gasreinigung in Verbindung mit GuD-Prozessen nach der Gaskühlung eine Gaswäsche erforderlich. Diese wird üblicherweise in einem Temperaturniveau oberhalb der Sublimationsgrenze des Rohgases betrieben. Somit besteht für den beschriebenen Gaskühler eine ausreichende Temperaturdifferenz zwischen Wasserdampftaupunkt und Gaseintrittstemperatur in den Wäscher, um eine Gasnachkühlung durch Wassereindüsung vorzunehmen. Die Wassereindüsung ist derart gestaltet, daß durch die Verdampfungswärme des eingedüsten Wassers das Rohgas soweit abgekühlt wird, daß es problemlos durch die nachgeschaltete Anlage geleitet werden kann, und der Wasserdampftaupunkt unterhalb der Gaseintrittstemperatur in den Gaswäscher liegt.

## Patentansprüche

1. Vorrichtung zur Kühlung von in einem Reaktor durch Partialoxidation erzeugten, heißen, feststoffbeladenen Gasen bestehend aus einem in einem Behälter (2) angeordneten und durch gekühlte Rohrwände gebildeten Strahlungskühler (1) und aus einem unterhalb des Strahlungskühlers (1) im unteren Teil des Behälters (2) angeordneten Wasserbad (6) einer Quenchkühlung, wobei an den Strahlungskühler (1) und das Wasserbad (6) jeweils ein Gasabführungsstutzen (8, 13) angeschlossen ist und die Gasabführung aus dem Strahlungskühler (1) und dem Wasserbad (6) einzeln abschaltbar ist, dadurch gekennzeichnet, daß innerhalb des Behälters (2) vor jedem Gasabführungsstutzen (8, 13) ein Gassammelraum (7, 12) angeordnet ist und die Gassammelräume (7, 12) durch das Wasserbad (6) voneinander getrennt sind.

2. Vorrichtung nach Anspruch 1, dadurch gekennzeichnet, daß an das Wasserbad (6) ein Wasserzulauf (21) und eine Umlaufleitung (22) angeschlossen sind und daß in der Umlaufleitung (22) außerhalb des Behälters (2) ein von einem Kühlmedium beaufschlagter Wärmetauscher (23) angeordnet ist.

3. Vorrichtung nach Anspruch 1 oder 2, dadurch gekennzeichnet, daß die Gasabführung aus dem Strahlungskühler (1) und aus dem Wasserbad (6) unmittelbar an dem jeweiligen Gasabführungsstutzen (8, 13) abschaltbar ist

4. Vorrichtung nach einem der Ansprüche 1 bis 3, dadurch gekennzeichnet, daß unterhalb des Strahlungskühlers (1) in dem dem Strahlungskühler (1) zugeordneten, ersten Gassammelraum (7) Düsen (20) zur Eindüsung von Wasser in das zu kühlende Gas angeordnet sind.

5. Vorrichtung nach einem der Ansprüche 1 bis 4, dadurch gekennzeichnet, daß in das Wasserbad (6) ein Einlauftrichter (11) hineinragt, der zusammen mit dem Wasserbad (6) den dem Wasserbad (6) zugeordneten, zweiten Gassammelraum (12) begrenzt.

6. Vorrichtung nach einem der Ansprüche 1 bis 5, dadurch gekennzeichnet, daß der Einlauftrichter (11) durch Wasser in einem offenen, an den Wasserzulauf (21) angeschlossenen und in das Wasserbad (6) mündenden System gekühlt ist.

7. Vorrichtung nach einem der Ansprüche 1 bis 6, dadurch gekennzeichnet, daß in dem zweiten Gassammelraum (12) oberhalb des Wasserbades (6) eine mechanische Staubabscheidung (14) und eine Tropfenabscheidung (17) vorgesehen sind.

8. Vorrichtung nach Anspruch 7, dadurch gekennzeichnet, daß die mechanische Staubabscheidung (14) durch eine Differenzdruckmessung (15) überwacht und durch Wasser abreinigbar ist.

9. Vorrichtung nach einem der Ansprüche 1 bis 8, dadurch gekennzeichnet, daß der zweite Gassammelraum (12) mit einem Sperrmedium beaufschlagbar und mit einer Entlüftung (19) versehen ist und daß der Gasdruck und der Wasserstand in dem zweiten Gassammelraum (12) überwacht wird.

## Claims

1. Device for the cooling of hot gases, which were produced by partial oxidation in a reactor and are laden by solid substances, the device consisting of a radiation cooler (1), which is formed by cooled tube walls and arranged in a container (2), and a water bath (6), which is arranged underneath the radiation cooler (1) in the lower part of the container (2), of a quench cooling, wherein a respective gas discharge connecting piece (8, 13) is connected to the radiation cooler (1) and to the water bath (6) and the gas conduction out of the radiation cooler (1) and out of the water bath (6) is switchable off individually, characterised thereby, that a respective gas-collecting chamber (7, 12) is arranged within the container (2) in front of each gas discharge connecting piece (8, 13) and the gas-collecting chambers (7, 12) are each separated from the other by the water bath (6).

2. Device according to claim 1, characterised thereby, that a water inlet (21) and a circulating duct (22) are connected to the water bath (6) and that a heat exchanger (23) acted on by a cooling medium is arranged externally of the container (2) in the circulating duct (22).

3. Device according to claim 1 or 2, characterised thereby, that the gas discharge out of the radiation cooler (1) and out of the water bath (6) can be switched off directly at the respective gas discharge connecting piece (8, 13).

4. Device according to one of the claims 1 to 3, characterised thereby, that nozzles (20) for the injection of water into the gas to be cooled are arranged underneath the radiation cooler (1) in the first gas-collecting chamber (7) associated with the radiation cooler (1).

5. Device according to one of the claims 1 to 4, characterised thereby, that an inlet funnel (11), which together with the water bath (6) bounds the second gas-collecting chamber (12) associated with the water bath (6), projects into the water bath (6).

6. Device according to one of the claims 1 to 5, characterised thereby, that the inlet funnel (11) is cooled by water in an open system which is connected to the water inlet (21) and opens into the water bath (6).

7. Device according to one of the claims 1 to 6, characterised thereby, that a mechanical dust separation (14) and a drip separation (17) are provided above the water bath (6) in the second gas-collecting chamber (12).

8. Device according to 7, characterised thereby, that the mechanical dust separation (14) is monitored by a pressure difference measurement (15) and cleanable by water.

9. Device according to one of the claims 1 to 8, characterised thereby, that the second gas-collecting chamber (12) is chargeable by a barrier medium and provided with a ventilation (19) and that the gas pressure and the water level in the second gas-collecting chamber (12) is monitored.

## Revendications

1. Dispositif de refroidissement de gaz chauds chargés en solides produits dans un réacteur par oxydation partielle, constitué d'un refroidisseur à rayonnement (1) placé dans la partie inférieure d'un récipient (2) comprenant des parois tubulaires refroidies et un bain d'eau (6) ledit dispositif étant du type à refroidissement par effet de trempe, des tubulures d'évacuation des gaz (8, 13) étant raccordées au refroidisseur à rayonnement (1) et au bain (6), l'évacuation de gaz hors du refroidisseur à rayonnement (1) et du bain (6) pouvant être coupée séparément, caractérisé en ce qu'une enceinte collectrice de gaz (7, 12) est disposée à l'intérieur du récipient (2), devant chaque tubulure d'évacuation de gaz (8, 13), et les enceintes collectrices de gaz (7, 12) étant séparées les unes des autres par le bain d'eau (6).

2. Dispositif selon la revendication 1, caractérisé en ce qu'au bain d'eau (6) sont raccordées une amenée d'eau (21) et une conduite de circulation (22), et en ce qu'un échangeur de chaleur (23), alimenté par un milieu de refroidissement, est disposé dans la conduite de circulation (22), à l'extérieur du récipient (2).

3. Dispositif selon la revendication 1 ou 2, caractérisé en ce que l'évacuation de gaz hors du refroidisseur à rayonnement (1) et hors du bain d'eau (6) peut être coupée directement sur la tubulure d'évacuation de gaz (8, 13) respective.

4. Dispositif selon l'une des revendications 1 à 3, caractérisé en ce que des buses (20), destinées à insuffler de l'eau dans le gaz à refroidir, sont disposées dans la première enceinte collectrice de gaz (7) associée au refroidisseur à rayonnement (1), au dessous de celui-ci.

5. Dispositif selon l'une des revendications 1 à 4, caractérisé en ce qu'un entonnoir d'introduction (11), qui délimite, conjointement avec le bain (6), la deuxième enceinte collectrice de gaz (12) voisine de ce dernier (6), plonge dans ledit bain.

6. Dispositif selon l'une des revendications 1 à 5, caractérisé en ce que l'entonnoir d'introduction (11) est refroidi au moyen d'eau circulant dans un système ouvert, raccordé à l'arrivée d'eau (21) et débouchant dans le bain (6).

7. Dispositif selon l'une des revendications 1 à 6, caractérisé en ce que, dans la deuxième enceinte collectrice de gaz (12), est prévue au-dessus du bain d'eau (6) la séparation mécanique des poussières (14) et des gouttes (17).

8. Dispositif selon la revendication 7, caractérisé en ce que la séparation mécanique des poussières (14) est contrôlée par mesure de la pression différentielle (15) et peut être rincée à l'eau.

9. Dispositif selon l'une des revendications 1 à 8 caractérisé en ce que la deuxième enceinte collectrice de gaz (12) peut être remplie par un milieu formant barrage et être pourvue d'une purge (19), et en ce que la pression de gaz et le niveau d'eau régnant dans la deuxième enceinte collectrice de gaz (12) sont régulés.
